**Europäisches Patentamt**

**European Patent Office**

**Office européen des brevets**

(19)

(11)  **EP 1 211 531 A2**

## (12) EUROPEAN PATENT APPLICATION

(43) Date of publication:
**05.06.2002 Bulletin 2002/23**

(51) Int Cl.7: **G02B 6/124**, G02B 6/293, G02B 5/18

(21) Application number: **01128410.6**

(22) Date of filing: **04.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.12.2000 JP 2000369025**

(71) Applicant: **Nippon Sheet Glass Co., Ltd.**
**Osaka-shi, Osaka 541-8559 (JP)**

(72) Inventors:
• **Kittaka, Shigeo**
  **Chuo-ku, Osaka-shi, Osaka (JP)**

• **Nara, Masatoshi**
  **Chuo-ku, Osaka-shi, Osaka (JP)**
• **Asai, Takahiro**
  **Chuo-ku, Osaka-shi, Osaka (JP)**
• **Nakazawa, Tatsuhiro**
  **Chuo-ku, Osaka-shi, Osaka (JP)**
• **Koyama, Tadashi**
  **Chuo-ku, Osaka-shi, Osaka (JP)**

(74) Representative: **HOFFMANN - EITLE**
**Patent- und Rechtsanwälte**
**Arabellastrasse 4**
**81925 München (DE)**

(54) **Optical device and spectroscopic, integrated optical apparatus using the optical device**

(57)    In an optical device (1) using an end surface of a periodic multilayer structure as a beam incidence surface (1a) or a beam exit surface, a high-resolving-power spectroscopic apparatus can be achieved without increase in size of the apparatus and by use of good directivity of beam (4) leaked from the periodic multilayer structure and strong wavelength dependence of the angle of the leaked beam. Particularly, by disposing layer surfaces of the multilayer structure perpendicularly to a substrate (2), optical devices suitable for integration of the devices can be formed.

FIG.1

**Description**

## BACKGROUND OF THE INVENTION

The present invention relates to an optical device and a spectroscopic apparatus used in an optical communication system, an optical measuring system, or the like.

In recent years, increase in capacity of an optical fiber communication network has been strongly demanded because of the rapid advance of popularization of Internet. Development of wavelength division multiplexing (WDM) communication as means for increasing the capacity has been advanced rapidly. An optical function device such as an optical demultiplexer, a filter or an isolator good in wavelength selectivity is necessary for such WDM communication because beam components with slightly different wavelengths are used for transferring different kinds of information individually. It is a matter of course that the aforementioned function device is strongly demanded in mass-production efficiency, reduction in size, integration in density, stability, and so on.

An optical demultiplexer (or a spectroscope) is used for the purpose of performing demultimplexing/detection of optical signals with a plurality of wavelengths multiplexed artificially as represented by wavelength division multiplexing of optical communication, or for the purpose of spectrally analyzing beam to be measured as represented by spectroscopic measurement. The optical demultiplexer requires a spectroscopic device such as a prism, a wave filter, a diffraction grating, or the like. Especially, a diffraction grating is a representative spectroscopic device. A device having a periodic fine corrugated structure formed on a surface of a substrate of quartz, silicon or the like is used as the diffraction grating. Diffracted beam components generated by the periodic corrugated structure interfere with one another, so that beam with a certain specific wavelength is made to exit in a specific direction. This characteristic is used as one of a demultiplexing device.

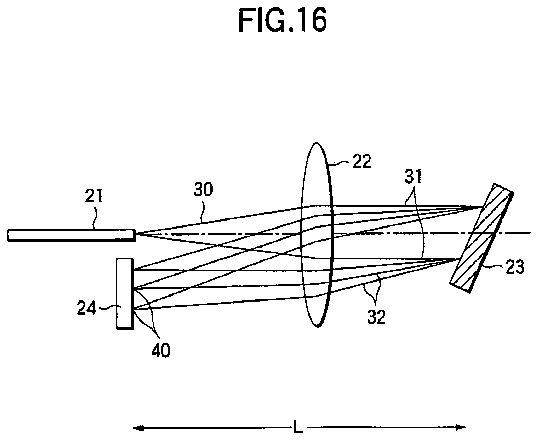

Fig. 16 shows an example of a spectroscopic optical system using such a diffraction grating. Wavelength-multiplexed beam rays 30 emitted from an optical fiber 21 are collimated by a collimator lens 22 to form collimated beam 31. The collimated beam 31 is made incident on a diffraction grating 23. The beam is demultiplexed by the diffraction grating 23, so that the beam components are made to exit from the diffraction grating 23 at different exit angles in accordance with the wavelengths. The exit beam components 32 pass through the collimator lens 22 again and form a set of condensed beam spots 40 on a beam-receiving surface 24. If photodetectors such as photodiodes or end surfaces of optical fibers are placed as beam-receiving means in the positions of the set of condensed beam spots respectively, signal outputs separated in accordance with predetermined wavelengths can be obtained. If beam incident on the diffraction grating has a continuous spectrum, spectrally discrete outputs can be obtained in accordance with the interval between the beam-receiving means placed on the beam-receiving surface.

In the case of a reflection type diffraction grating, there holds the expression:

$$\sin \theta i + \sin \theta o = m\lambda /d$$

in which $\underline{m}$ is the diffraction order of the diffraction grating, $\underline{d}$ is the grating constant thereof, $\lambda$ is the wavelength used, $\theta i$ is the angle between a line normal to the surface where the diffraction grating is formed and incident beam rays (the optical axis 5 of the optical fiber), and $\theta o$ is the angle between the normal line and exit beam rays. When the wavelength changes by $\Delta\lambda$ while $\theta i$ is kept constant, the positional change $\Delta x$ of beam rays reaching the beam-receiving surface far by a distance L from the diffraction grating is given by the expression:

$$\Delta x = (Lm/(d\cdot\cos \theta o))\cdot\Delta\lambda$$

Accordingly, if beam-receiving means are placed on the beam-receiving surface so as to be arranged at intervals of a positional distance calculated on the basis of the aforementioned expression in accordance with the wavelength interval, signals separated in accordance with the wavelengths can be obtained.

The wavelength dependence of the angle of beam made to exit from the diffraction grating is, however, low. For example, assume now the case where beam is to be demultiplexed at wavelength intervals of 0.8 nm (which correspond to frequency intervals of 100 GHz) in a 1.55 μm-wavelength band used in optical communication. When the diffraction order $\underline{m}$, the incident angle $\theta i$ and the exit angle $\theta o$ are 25, 71.5° and 38.5° respectively, the grating constant $\underline{d}$ of the diffraction grating is 24.7 μm. In this system, the change of the exit angle obtained with respect to the wavelength distance of 0.8 run is merely about 0.06°. Therefore, the distance L of 48 mm is required for the beam spots separately received by the beam-receiving devices arranged at intervals of 50 μm.

That is, the positional change $\Delta x$ of each of the beam spots on the beam-receiving surface generally needs to be not smaller than the order of tens of μm because each of the beam-receiving means has a predetermined size. Because $\underline{m}$ and $\underline{d}$ which are constants of the diffraction grating cannot be changed largely, the distance L needs to be large enough to obtain necessary $\Delta x$ in accordance with the small wavelength change $\Delta\lambda$. Accordingly, in order to improve the performance of the optical demultiplexer (spectroscopic apparatus) using the diffraction grating, there brings a problem that large-sized apparatus cannot be avoided.

## SUMMARY OF THE INVENTION

In order to solve the above problem, an object of the present invention is to provide an optical device which generates a larger angle change from a diffraction grating with respect to wavelengths and which is adapted for optical integration in order to facilitate the provision of a smaller-sized spectroscopic optical system.

According to the present invention, there is provided an optical device comprising: a planar substrate; and a periodic multilayer structure formed on a surface of the planar substrate so that layer surfaces of the periodic multilayer structure are perpendicular to the surface of the substrate, one of end surfaces of the multilayer structure being used as at least one of a beam incidence surface and a beam exit surface.

As an example, one period in the periodic multilayer structure is constituted by layers formed of two different materials, and one of the layers may be an air or vacuum layer.

Further, performance of the periodic multilayer structure can be improved by providing a reflection layer on one of opposite surfaces of the periodic multilayer structure. In addition, the layer surfaces of the periodic multilayer structure may be formed into a curved shape as a whole.

In such an optical device, a waveguide, a waveguide layer, a lens, an optical fiber fixing structure, a semiconductor laser, and so on, can be integrated on a substrate on which the periodic multilayer structure is formed.

Further, when an end surface of the periodic multilayer structure is used as a beam incidence surface, light beam in which a plurality of wavelengths are mixed is made incident on the end surface of the periodic multilayer structure, and beam rays are made to exit from the surface of the multilayer structure opposite to the reflection layer at angles different in accordance with wavelengths, a spectroscopic apparatus can be provided. On this occasion, preferably, the substrate is planar and parallel and has a thickness not smaller than 0.1 mm and not larger than 2 mm.

According to the present invention, in the optical device configured so that the end surface of the periodic multilayer structure is provided as a beam incidence surface or as a beam exit surface, good directivity of beam leaked from the multilayer structure and strong wavelength dependence of an angle of the leaked beam are utilized. Further, the layer surfaces of the periodic multilayer structure are set perpendicularly to the substrate so that the leaked beam can be made parallel to the substrate. Accordingly, an integrated optical device can be provided by arrangement of other optical devices on one and the same substrate.

The present disclosure relates to the subject matter contained in Japanese patent application No. 2000-369025 (filed on December 4, 2000), which is expressly incorporated herein by reference in its entirety.

## BRIEF DESCRIPTION OF THE DRAWINGS

Fig. 1 is a typical view showing the basic structure of an optical device according to the present invention.
Fig. 2 is an explanatory view showing a periodic multilayer structure according to the present invention.
Fig. 3 is a view showing the relation between guided beam and refracted beam in two layers of different homogeneous materials.
Fig. 4 is a view showing an example of photonic band diagrams in the periodic multilayer structure.
Fig. 5 is a view showing the relation between guided beam and refracted beam in a first band of the periodic multilayer structure.
Fig. 6 is a view showing the relation between guided beam and refracted beam in a second band of the periodic multilayer structure.
Fig. 7 is a view showing the relation between guided beam and refracted beam in a third band of the periodic multilayer structure.
Figs. 8A and 8B are views showing the structure of an embodiment of the periodic multilayer structure.
Fig. 9 is a view showing an optical system for evaluating the periodic multilayer structure.
Fig. 10 is a perspective view showing an example of configuration of a spectroscopic apparatus according to the present invention.
Fig. 11 is a plan view showing another example of configuration of the spectroscopic apparatus according to the present invention.
Fig. 12 is a plan view showing a further example of configuration of the spectroscopic apparatus according to the present invention.
Fig. 13 is a plan view showing a still further example of configuration of the spectroscopic apparatus according to the present invention.
Fig. 14 is a plan view showing an example of configuration of an integrated optical apparatus according to the present invention.
Fig. 15 is a plan view showing another example of configuration of the integrated optical apparatus according to the present invention.
Fig. 16 is a view showing an example of a background-art spectroscopic optical apparatus using a diffraction grating.

## DESCRIPTION OF THE PREFERRED EMBODIMENT

A mode for carrying out the present invention will be described below specifically.

In most cases, use of such an optical multilayer film for an anti-reflection film, a filter, or the like, is generally conceived upon the assumption of beam rays which pass through the uppermost layer surface to the lowermost layer surface of the multilayer film provided on a surface of the substrate. There is none but the following example as an example in which an end surface of the multilayer film, that is, a surface where the periodic multilayer structure is exposed is used as a beam incidence surface or as a beam exit surface.

Theoretical analysis in a direction of beam rays incident on a section of an inclined multilayer film has been described (Applied Physics B, Vol.39, p.231, 1986). The fact that the same polarization separating effect as that of a birefringent material is obtained by use of properties (so-called structural birefringence) of the multilayer film.the refractive index of which varies in accordance with TE and TH polarized beam, has been disclosed to attempt separation of polarized beam due to structural birefringence (Optics Letters Vol.15, No.9, p.516, 1990). There has been further a report that the periodic multilayer film is used as a one-dimensional photonic crystal for obtaining very large dispersion (super-prism effect) because the first band is shaped linearly in a neighbor of the band gap ("International Workshop on Photonic and Electromagnetic Crystal Structures" Technical Digest, F1-3).

The present invention has a feature in that layer surfaces of a periodic multilayer structure are formed on a substrate so as to be perpendicular to a surface of the substrate while an end surface of the periodic multilayer structure is used as a beam incidence surface or as a beam exit surface.

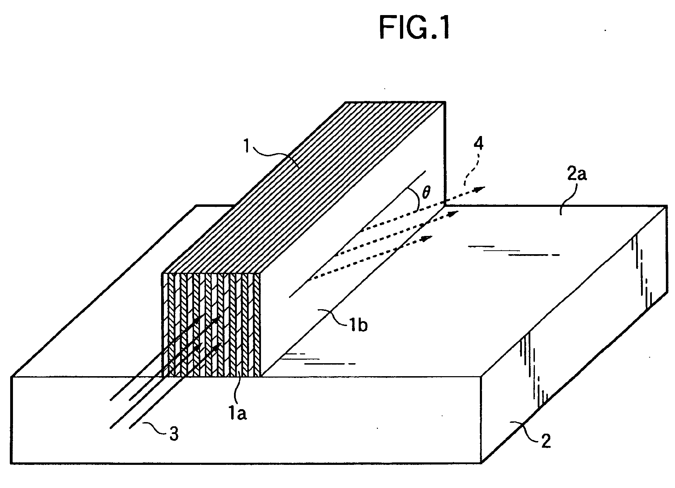

Fig. 1 is a perspective view showing typically a basic embodiment of the present invention. A periodic multilayer structure 1 is formed on a surface 2a of a parallel planar substrate 2 so that layer surfaces of the periodic multilayer structure 1 are perpendicular to the substrate. Further, incident beam 3 is sent inside the periodic multilayer structure 1 from an end surface 1a thereof, so that beam 4 (exit beam) refracted by a photonic effect is taken out from a surface 1b of the periodic multilayer structure 1.

According to an experiment conducted by the present inventors, when incident beam (laser beam) 3 with a wavelength $\lambda$ is made to enter the periodic multilayer structure 1 from the end surface 1a, refracted beam 4 is generated due to the photonic crystal effect, in addition to the guided beam in the inside of the periodic multilayer structure 1. The direction (angle $\theta$) of the refracted beam 4 is constant with respect to wavelength $\lambda$, so that the refracted beam 4 is parallel light beam with very good directivity. Further, because the value of $\theta$ varies largely in accordance with the value of $\lambda$, the multilayer structure 1 can be used as a high-resolving-power spectroscopic device.

The principle of the aforementioned phenomenon will be described in brief.

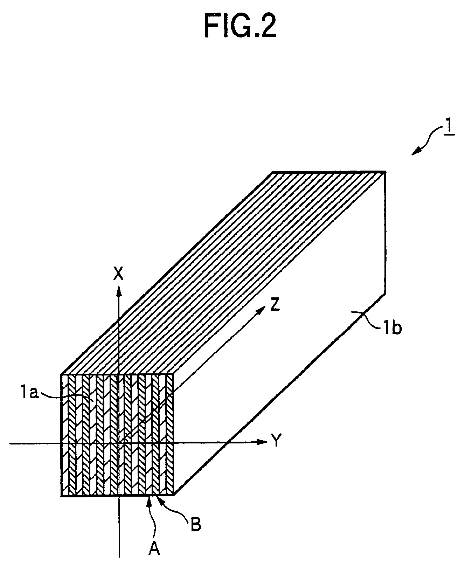

Fig. 2 is a perspective view showing an example of the periodic multilayer structure 1 which is a subject of the present invention. Layers of a material A having a refractive index $n_A$ and a thickness $t_A$ and layers of a material B having a refractive index $n_B$ and a thickness $t_B$ are laminated stratiformly alternately in the Y direction. Boundary surfaces between respective layers and a surface 1b are parallel to one another in an (X, Z) plane. Here, the boundary surfaces and the surface 1b are generically called "layer surfaces". The period $\underline{a}$ in the multilayer structure is equal to $(t_A + t_B)$.

If analysis is made as to how beam with a wavelength $\lambda$ is propagated in such a periodic multilayer structure 1 when the beam is incident on the end surface 1a (not parallel to the layer surfaces) of the periodic multilayer structure 1, it is found that the periodic multilayer structure 1 under a predetermined condition serves as a so-called photonic crystal to thereby exhibit an effect peculiar to the propagated beam.

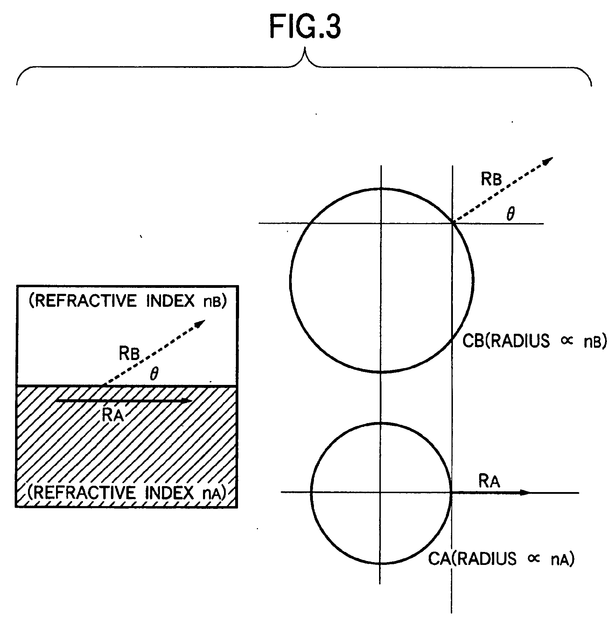

Here, a method for expressing refraction of beam in a boundary between two media each homogeneous in refractive index by means of plotting will be described with reference to Fig. 3. Beam rays $R_A$, which advance along the vicinity of the medium A side boundary surface between the medium A with a refractive index $n_A$ and the medium B with a refractive index $n_B$ ($n_A < n_B$) so as to be parallel to the boundary surface, are emitted, as refracted beam $R_n$ with an angle $\theta$, toward the medium side B.

This angle $\theta$ can be obtained on the basis of a diagram plotted by use of two circles $C_A$ and $C_B$ with radii proportional to $n_A$ and $n_B$ respectively. As shown in Fig. 3, circles $C_A$ and $C_B$ are plotted. A vector having a direction corresponding to the beam rays $R_A$ is plotted as a line normal to the circle $C_A$. A line parallel to a line connecting the centers of the two circles $C_A$ and $C_B$ is plotted from a point on the circle $C_A$ to thereby obtain a point of intersection with the circle $C_B$. A vector plotted from this point of intersection in the direction of a line normal to the circle $C_n$ shows the direction of refracted beam $R_B$. This circle $C_A$ is equivalent to the most basic photonic band in the case where beam with a wavelength $\lambda$ propagates in a homogeneous material A.

A band graph of the periodic multilayer structure can be calculated on the basis of the theory of photonic crystal. The method of calculation has been described in detail in "Photonic Crystals", Princeton University Press, 1995, Physical Review B Vol.44, No.16, p.8565, 1991, or the like.

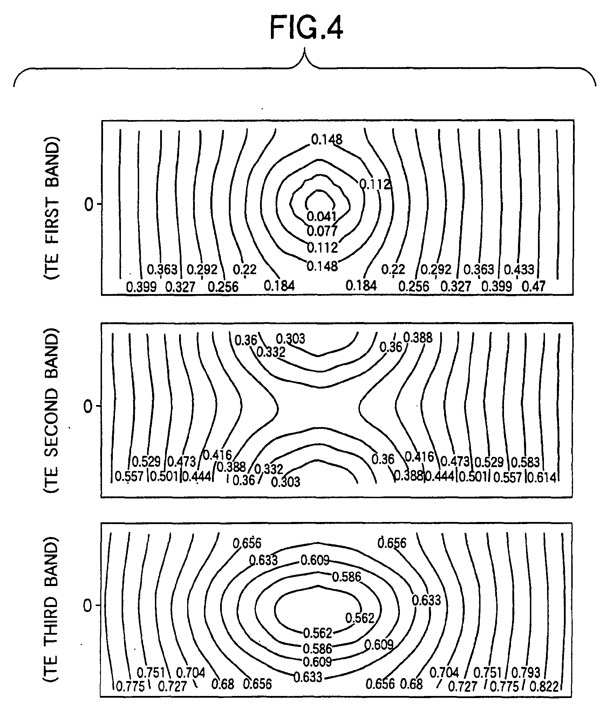

Assume that the periodic multilayer structure is limited in the Y direction (the direction of lamination) in Fig. 2 but is extended infinitely in the X and Z directions (the directions of spread of a plane) in Fig. 2. Fig. 4 shows results of band calculation by a plane wave method, upon first, second and third bands of TE-polarized beam with respect to a plurality of wavelengths in a multilayer structure in which two kinds of layers with refractive indices represented by

$n_A$ = 3.478 (thickness = 0.5a) and
$n_B$ = 1.00 (thickness = 0.5a) are laminated alternately with a period of $\underline{a}$. Respective diagrams in Fig. 4 show Brillouin zones each representing one period in a reciprocal space. The vertical axis represents the Y-axis direction in which the upper and lower boundaries express the range of $\pm\pi/a$ with respect to the center. The horizontal axis represents the Z-axis direction (or the X-axis direction) which has no boundary because the z-axis direction is an aperiodic direction. The left and right ends in each of the diagrams shown in Fig, 4 are provided to show the range of calculation for convenience' sake. In each Brillouin zone, a position means a wave vector in the multilayer structure, and a curve means a band corresponding to the wavelength $\lambda$ of incident beam (in a vacuum). Incidentally, numerical characters corresponding to respective curves in Fig. 4 are values $(a/\lambda)$ each obtained by dividing the period $a$ of the multilayer structure by the wavelength $\lambda$. In a band diagram of the periodic multilayer structure, discontinuity (so-called photonic band gap) occurs when $a/\lambda$ is larger than a certain value.

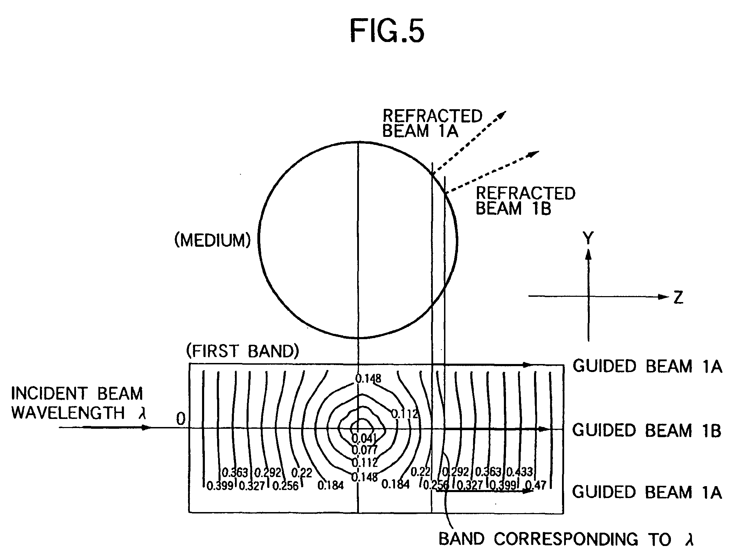

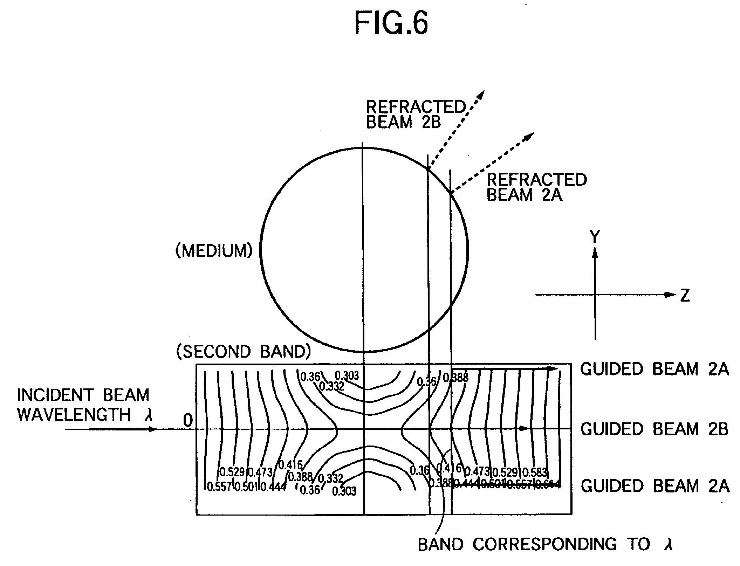

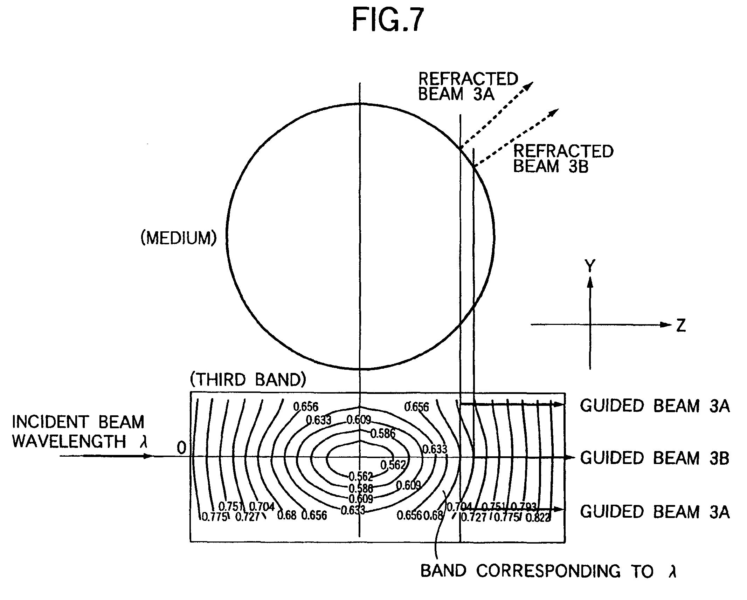

Figs. 5 to 7 are diagrams of the first, second and third bands, respectively, showing the relation between guided beam in the Z-axis direction and refracted beam thereof toward the medium tangent to the surface of the multilayer structure when incident beam 3 with a wavelength $\lambda$ enters the periodic multilayer structure. Because beam rays in the multilayer structure can be expressed as lines normal to curves shown in each of the band diagrams, the guided beams in the Z-axis direction in the first, second and third bands can be expressed as 1A and 1B, 2A and 2B, and 3A and 3B in Figs. 5 to 7, respectively. According to the inventors' research, the guided beams especially having large intensity are 1B and 3B. Each of the guided beams is made to exit as refracted beam from the boundary surface between the multilayer structure and the medium tangent to the surface of the multilayer structure. To emit the refracted beam, however, it is necessary that the refractive index of the medium expressed by the radius of each circle is higher than a predetermined value as is obvious from Figs. 5 to 7.

The angle $\theta$ of refracted beam corresponding to the guided beam is kept approximately constant. Hence, it is expected the exit beam serves as light beam with very good directivity. Because the value of $\theta$ varies largely in accordance with the wavelength $\lambda$ of incident beam, high-resolving-power wavelength separation can be achieved. Hence, the multilayer structure configured as shown in Fig. 1 can be used as a high-resolving-power spectroscopic device.

Because the band diagrams in TE-polarized beam is different from those in TH-polarized beam, the value of $\theta$ varies largely in accordance with polarized beam even in the case where the wavelength of beam is constant. By utilizing this characteristic, the optical device according to the present invention can be also used for separation of polarized beam.

The periodic multilayer structure is not limited to the configuration using two kinds of materials as shown in Fig. 2. Three or more kinds of materials may be used as constituent members of the periodic multilayer structure. The respective layers as to the refractive indices and thicknesses thereof need to be laminated with a predetermined period. The periodic multilayer structure is generally constituted by a laminate of $n$ kinds of materials (in which $n$ is a positive integer) . Let $n_1$, $n_2$, ..., and $n_n$ be the refractive indices of materials 1, 2, ..., and $n$ constituting one period. Let $t_1$, $t_2$, ..., and $t_n$ be the thicknesses of the materials 1, 2, ..., and $n$ respectively The average refractive index $n_M$ per period in the multilayer structure with respect to the wavelength $\lambda$ used is defined as follows:

$$n_M = (t_1 \cdot n_1 + t_2 \cdot n_2 + ... + t_n \cdot n_n)/a$$

in which one period a is given by the expression:

$$a = t_1 + t_2 + .. + t_n$$

The condition concerning the average refractive index and the period of the multilayer structure suitable for the present invention can be given by the expression:

$$0.5\lambda/n_M \leq a$$

If this condition can be satisfied, the effect of photonic crystal can be exerted because $a/\lambda$ is larger than the band gap formed in the direction of lamination and near $0.5\lambda/n_M = a$. If the period $a$ is smaller than the range represented by the above condition, the characteristic of the multilayer structure becomes near to that of a homogeneous medium with the average refractive index.

The multilayer structure according to the present invention can be produced on a substrate by photolithography widely used for producing a semiconductor device. For example, an Si layer is formed on a substrate and a photo resist is applied thereto. A stripe-like photo mask having a width corresponding to a thickness of each layer is used to expose and develop the photo resist. The photo resist patterned thus is used as a mask so that the Si layer is etched with a suitable etching solution. In such a manner, a multilayer structure in which the portions of the stratiform Si layers substantially perpendicular to the substrate and air layers are laminated alternately can be formed on the substrate. In this case, various structural patterns may be woven in the photo mask so that the multilauer structure and an optical device other than the multilayer structure can be formed simultaneously on the substrate.

As each of the materials used for the multilayer structure in the present invention, any material may be used without particular limitation if the transparency of the material can be retained in the wavelength range used. The preferred material is a material which can be laminated on the substrate by a film-forming method such as a vacuum evaporation method, a sputteringmethod, an ion-assist evaporation method, a CVD method, or the like, and which can be etched easily. In addition to Si, examples of the suitable material may include silica, titanium oxide, tantalum oxide, niobium oxide, magnesium fluoride, etc.

Of course, processing may be subjected to the substrate directly. Examples of the material of the substrate to be processed are various glass materials such as soda lime glass, optical glass, silica, and so on. In addition, semiconductor materials such as Si, GaAs, InP, and so on, may be used. It is a matter of course that an epitaxial film of any one of the above materials grown on a signal crystal substrate may be used. Further, various kinds of optical crystals such as lithium niobate having an optical function may be used.

It is easiest to produce a structure in which layers of any one of the above-mentioned materials are combined with air or vacuum layers (refractive index: 1). Of course, the portions of the air layers may be filled with another medium. However, if a difference in refractive index between the materials is small, a modulation effect may become weak, or the effect anticipated from band calculation or the like may not be exerted. Accordingly, preferably, a refractive index difference not smaller than 0.1 is retained.

It is the simplest that the multilayer structure in one period is constituted by two layers equal in physical thickness to each other. The average refractive index and band structure may be adjusted by means of (1) changing the thickness ratio of the two layers, (2) increasing the number of layers to three or more and (3) using three or more kinds of film materials so as to improve demultiplexing characteristic, polarizing characteristic, efficiency of utilizing incident beam, etc. of the multilayer structure.

Further, even in the case where the refractive index of each of layers constituting the multilayer structure varies continuously, the characteristic of the multilayer structure can be kept substantially the same if the difference in refractive index is retained.

As the material of the substrate, the same material as that used for processing the substrate as described above can be used. In addition, if the limit in temperature characteristic or the like is small, an organic material may be used.

Next, an embodiment of the periodic multilayer structure will be described while the spectroscopic characteristic thereof will be explained.

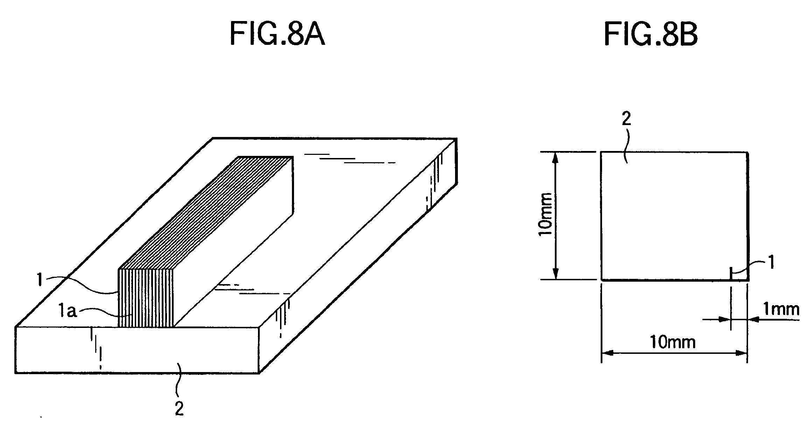

This embodiment shows a periodic multilayer structure obtained by processing an Si substrate directly. A stripe-like pattern is formed in the Si substrate having a thickness of 1 mm by a photolithography technique to thereby form a mask for etching. The etching is performed by reactive ion etching, so that a periodic multilayer structure 1 having Si layers and air layers laminated alternately as shown in Fig. 8A is obtained. The period of the multilayer structure is set to be 0.86 μm, and the thickness of each Si layer and the thickness of each air layer are both set to be 0.43 μm. The mask is set to form 20 Si layers. The height of the multilayer structure 1, that is, the depth of etching is set to be 20 μm. As shown in Fig. 8A, the substrate is cut into a size so that an end surface 1a of the multilayer structure 1 agrees with the end surface of the substrate. Thus, the length of the multilayer structure 1 is set to be 400 μm. The practical size of the substrate 2 after the cutting and the position where the multilayer structure 1 is located on the substrate 2 is shown in Fig. 8A. The location of the multilayer structure on the substrate is processed so as to be suitable for the following evaluation. As will be described later, in the case where the periodic multilayer structure located on the substrate is applied to an apparatus, the multilayer structure needs to be located in a suitable position on the substrate in accordance with the applied apparatus.

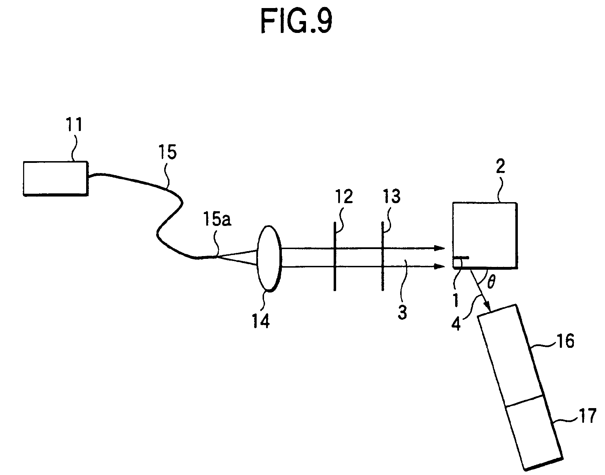

Fig. 9 shows an optical system for evaluating the characteristic of the multilayer structure 1. Laser beam with wavelengths $\lambda$ = 1550 nm and 1520 nm emitted from a semiconductor laser beam source 11 was taken out from an optical fiber 15. The beam made to exit from an end surface 15a of the optical fiber was collimated by a lens 14 and passed through a quarter-wave plate 12 and a crystal polarizer 13 to thereby obtain TE- and TH-linearly polarized beams. The two wavelengths were used in combination with the two states of polarization to form incident beam which was made incident on the end surface of the multilayer substrate 1. Exit beam 4 passed through an f-θ image-forming lens 16 and was input to an infrared CCD camera 17 so as to be observed as an image.

As a result, the exit beam 4 having a specific angle θ was detected. The value of θ is shown in Table 1.

[Table 1]

| wavelength (nm) | polarized beam | θ (°) |
|---|---|---|
| 1520 | TE | 56 |
| 1550 | TE | 65 |
| 1520 | TH | 31 |
| 1550 | TH | 49 |

It was found from the result that the quantity of the angular change in accordance with the wavelength change of 30 nm was 9° for TE-polarized beam and 18° for TH-polarized beam. This shows that very large dispersion is genera Led due to the so-called super-prism effect.

An applied example of the present invention will be described below.

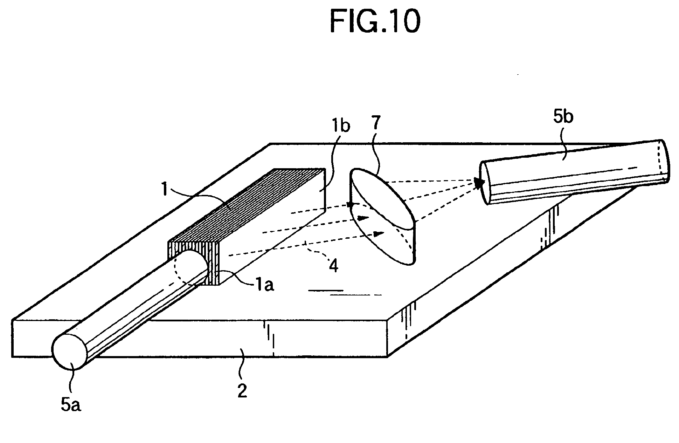

Fig. 10 shows an example in which a multilayer structure 1 and a lens body 7 are formed simultaneously on one and the same substrate 2 and optical fibers 5a and 5b are used as beam input/output means. Even in the case where the beam input to the end surface 1a of the multilayer structure includes a plurality of wavelengths, only beam having a substantially single wavelength can be used as output beam because exit beam 4 from a surface 1b of the multilayer structure is condensed by the lens body 7 and made to enter the optical fibers 5b to thereby take the resulting beam out. Thought not shown in the drawing, V-shaped grooves for positioning the optical fibers may be formed simultaneously in the substrate 2.

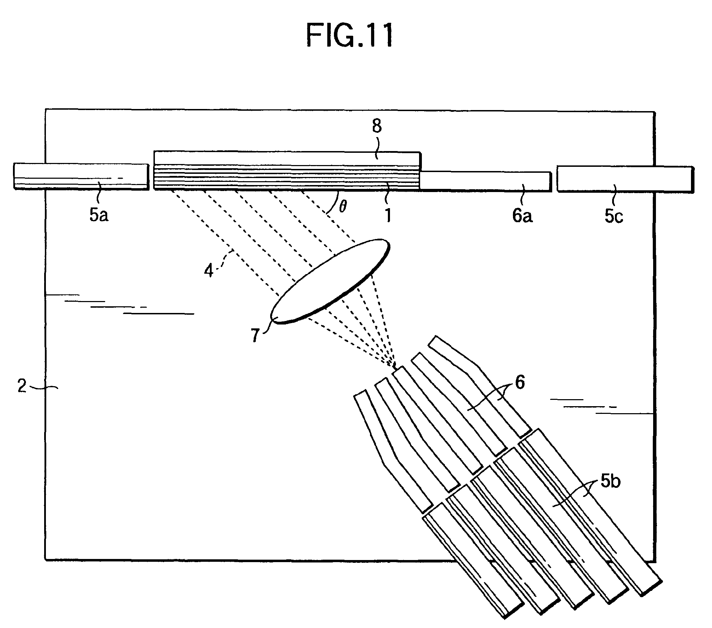

Fig. 11 shows an example of the spectroscopic apparatus in which beam with a plurality of wavelengths contained in input beam is separated into a plurality of output fibers 5b so that the beam components are taken out from the output optical fibers 5b respectively. The input beam including a plurality of wavelengths emitted from the input optical fiber 5a is made incident on the multilayer structure 1, so that exit beam 4 having different exit angles θ in accordance with wavelengths is made to exit in a direction substantially parallel with the substrate 2. The exit beam 4 is condensed and coupled to a predetermined one of the output optical fibers 5b by the lens body 7 formed on one and the same substrate 2.

On this occasion, it is preferable that optical waveguides 6 each having a specific refractive index are provided on one and the same substrate 2 and just before incidence end surfaces of the output optical fibers respectively, In the case where the interval between adjacent two wavelengths is narrow, the distance between the lens body 7 and each of the incidence end surfaces of the output optical fibers 5b has to be made long in order to separate and condense the beam into parts at intervals of a distance not smaller than the diameter of each optical fiber because the core of each of the optical fibers generally has a diameter of 25 μm. Further, because the exit angle θ of the exit beam varies in accordance with the wavelengths, it is preferable, from the point of view to couple the exit beam to the optical fibers with high efficiency, that the direction of the optical axis of each output optical fiber can be adjusted finely. Such an operation is, however, troublesome. Each of the optical giudewaves 6 is provided as a curved wavegiude as shown in the Fig. 11, the interval between the waveguides at the incidence ends is set to be narrower than the interval between the optical fibers, and the direction of the optical axis of each optical fiber is set optimally. In such a manner, there is an effect that reduction in area of the substrate, coupling efficiency of the exit beam can be improved, in comparison with the case where exit beam 4 is directly coupled to each of the above-mentioned output optical fibers 5b.

Assume now that the beam having a plurality of wavelengths at intervals of 4 nm is to be demultiplexed in the vicinity of a wavelength of 1550 nm. From the above-mentioned evaluation result, a change of the exit angle θ represented by Δ θ = 1° with respect to the wavelength interval of about 4 nm is obtained in TE-polarized beam with a wavelength near to 1550 nm. When the focal length of the lens body 7 is replaced by $f$, the distance $d$ between the incidence ends of the optical waveguides 6 is given by d = f·sin(Δθ). Because sin (1°) = 0.017, the incidence ends of the optical waveguides may be preferaably disposed at intervals of d = 34 μm when f = 2 mm. The distance $d$ may be preferably enlarged by the curved waveguides so as to be not smaller than the diameter (125 μm) of each optical fiber.

When a reflection means 8 is further provided for beam emitted from the multilayer structure 1 in a direction reverse to the lens body 7 so that the reflection means 8 is tangent to one side of the multilayer structure 1, more intensive exit beam can be obtained because the direction of exit of the exit beam can be limited to one side. Therefore, a multi-film layer designed to reflect beam with a desired wavelength efficiently is preferably used as the reflection means 8. Further, a thin film of silver, aluminium, silicon, germanium, or the like, may be formed by an evaporation method, a sputtering method, or the like. Incidentally, an optical waveguides 6a and an output optical fiber 5c are provided so that the beam components not emitted as refracted beam from the multilayer structure 1 but guided are coupled to an end surface opposite to the incident end surface so as to exit from the opposite end surface.

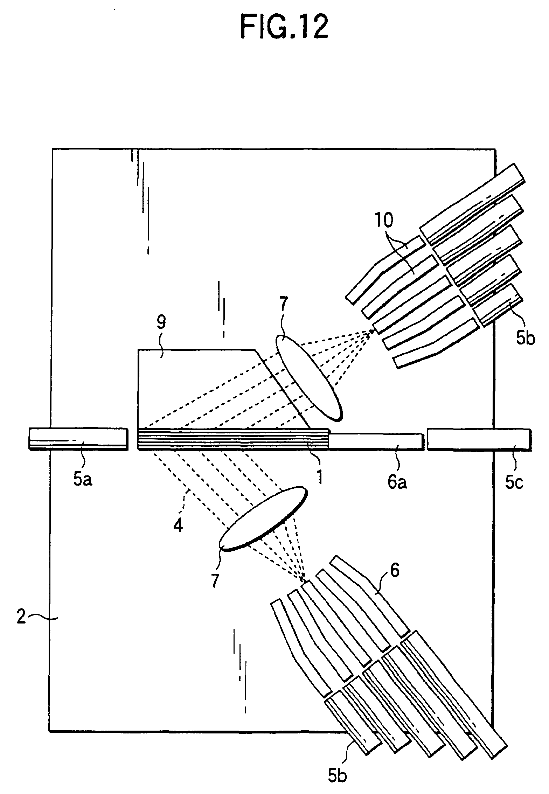

In the configuration shown in Fig. 11, among the beam components emitted from the opposite sides of the multilayer structure 1, beam components on one side are reflected by the reflection means 8 and an output means is provided only on the other side of the multilayer structure 1. The exit beam, however, may be used on both sides of the multilayer structure 1. Fig. 12 shows an example in which an air surface is disposed on one side of the multilayer structure 1 and a waveguide layer 9 having a specific refractive index is disposed on the other side. Since refractive indices on the opposite sides of the multilayer structure 1 are different from each other, two kinds of spectral distributions can be performed simultaneously. For example, the two sides can be used for TE-polarized beam and TH-polarized beam, respectively.

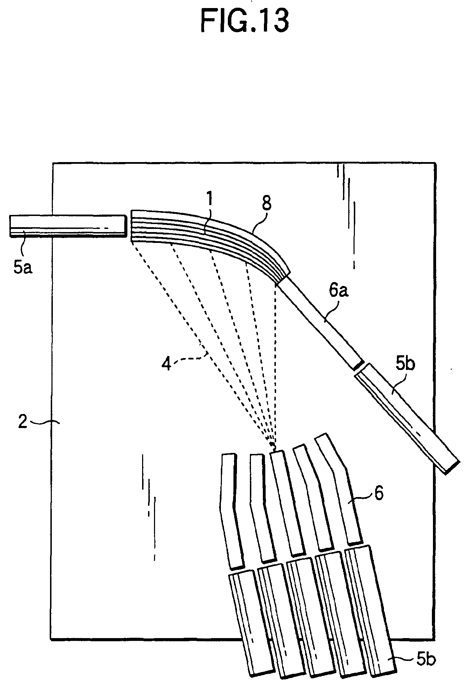

Fig. 13 shows the case where layer surfaces of the multilayer structure 1 are curved as a whole so that beam having one and the. same wavelength can be condensed without provision of any condensing means. Such a curved shape may be also formed easily by designing a curved pattern as a photo mask.

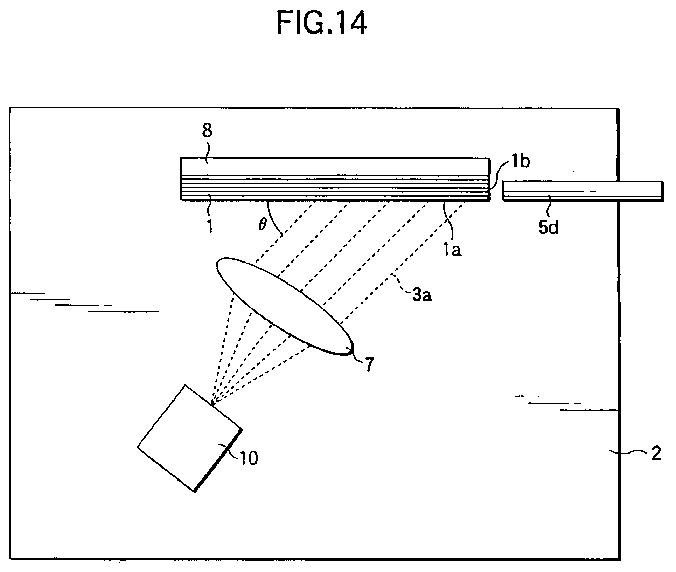

Fig. 14 shows an apparatus in which a semiconductor laser 10 is integrated as a beam source on one and the same substrate 2 so that the beam emitted from the semiconductor laser 10 is condensed and coupled to an output optical fiber 5d. The beam emitted from the semiconductor laser 10 is collimated as parallel beam 3a by a lens body 7 formed on one and the same substrate 2. The beam is made incident on a surface 1b of the multilayer structure 1. When the beam is made incident at a predetermined angle θ on the surface 1b of the multilayer structure 1 inversely to the above-mentioned case, exit beam is obtained from the end surface 1a of the multilayer structure 1, Even if the beam emitted from the semiconductor laser 10 contains a plurality of wavelengths due to multimode dispersion, beam with only one single wavelength can be used as output beam.

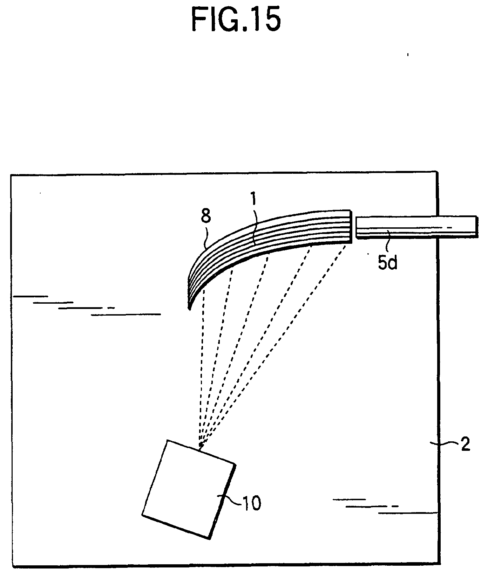

The lens may be omitted from the configuration shown in Fig. 14 and the multilayer structure 1 may be curved instead. Fig. 15 shows an example of mounting the multilayer structure 1 in this case.

As described above, in accordance with the present invention, a high-resolving-power spectroscopic apparatus, a high-resolving-power polarization separating apparatus, or the like, can be achieved by use of good directivity of refracted beam from a periodic multilayer structure and strong wavelength dependence of the direction of the beam. Further, in accordance with the configuration of the present invention, integration of a plurality of optical devices on one and the same substrate can be made easily in addition to integration of the periodic multilayer structure, so that the aforementioned apparatus can be achieved without increase in size thereof.

**Claims**

1. An optical device comprising:

   a planar substrate; and
   a periodic multilayer structure formed on a surface of said planar substrate so that layer surfaces of said periodic multilayer structure are perpendicular to said surface of said substrate, one of end surfaces of said structure being used as at least one of a beam incidence surface and a beam exit surface.

2. An optical device according to claim 1, wherein one period in said periodic multilayer structure is constituted by layers formed of two different materials, one of said layers being an air or vacuum layer.

3. An optical device according to claim 1, wherein a reflection layer is provided on one of opposite surfaces of said periodic multilayer structure.

4. An optical device according to claim 1, wherein said layer surfaces of said periodic multilayer structure are formed into a curved shape as a whole.

5. A spectroscopic apparatus comprising:

   an optical device as defined in claim 1;
   an incidence means by which a multiplexed light beam with a plurality of wavelengths is made incident onto one of end surfaces of a periodic multilayer structure; and

   a detection means by which light beam exiting from one of surfaces of said periodic multilayer structure at different angles in accordance with wavelengths is detected.

6. A spectroscopic apparatus according to claim 5, wherein said incidence means is constituted by an optical fiber.

7. A spectroscopic apparatus according to claim 5, wherein said detection means is constituted by a combination of a lens body and an optical fiber which are both formed on said surface of said planar substrate.

8. A spectroscopic apparatus according to claim 5, wherein said detection means is constituted by a combination of a lens body and an optical waveguide which are formed on said surface of said planar substrate, and an optical fiber.

9. A spectroscopic apparatus according to claim 5, wherein a reflection layer is provided on one of opposite surfaces of said periodic multilayer structure so that said light beam is made to exit from the other surface of said periodic multilayer structure.

10. A spectroscopic apparatus according to claim 5, wherein media tangent to opposite surfaces of said periodic multilayer structure are different in refractive index from each other.

11. A spectroscopic apparatus according to Claim 10, wherein one of said media is air or vacuum, and the other thereof is a homogeneous solid waveguide layer.

12. A spectroscopic apparatus according to claim 5, wherein layer surfaces of said periodic multilayer structure are formed into a curved shape as a whole.

13. A spectroscopic apparatus according to any one of claims 6 to 8, wherein grooves are provided in said surface of said substrate for retaining said optical fiber in a predetermined position.

14. An integrated optical apparatus comprising:

   an optical device as defined in claim 1;
   an incidence means by which a multiplexed light beam with a plurality of wavelengths is made incident onto one of surfaces of a periodic multilayer structure at a predetermined incident angle; and
   a detection means by which light beam exiting from one of end surfaces of said periodic multilayer structure is received.

**15.** An integrated optical apparatus according to claim 14, wherein said incidence means is constituted by a semiconductor laser formed on said planar substrate.

**16.** An integrated optical apparatus according to claim 14, wherein said detection means is constituted by an optical fiber.

**17.** An integrated optical apparatus according to claim 14, wherein layer surfaces of said periodic multilayer structure are formed into a curved shape as a whole.

**18.** An integrated optical apparatus according to claim 16, wherein grooves are provided in said surface of said substrate for retaining said optical fiber in a predetermined position.

# FIG.1

EP 1 211 531 A2

# FIG.2

# FIG.3

# FIG.4

FIG.5

# FIG.6

REFRACTED BEAM 2B

REFRACTED BEAM 2A

(MEDIUM)

Y

Z

(SECOND BAND)

INCIDENT BEAM WAVELENGTH $\lambda$

0

GUIDED BEAM 2A

GUIDED BEAM 2B

GUIDED BEAM 2A

0.36  0.303
0.332
0.36  0.388

0.529 0.473  0.416
0.388 0.332
0.557 0.501 0.444  0.36  0.303

0.36  0.416 0.473 0.529 0.583
0.388 0.444 0.501 0.557 0.644

BAND CORRESPONDING TO $\lambda$

EP 1 211 531 A2

FIG.7

FIG.8B

FIG.8A

# FIG.9

FIG.10

# FIG.11

EP 1 211 531 A2

# FIG.12

# FIG.13

EP 1 211 531 A2

# FIG.14

# FIG.15

# FIG.16